(19) Europäisches Patentamt
European Patent Office
Office européen des brevets

(11) **EP 4 142 059 B1**

(12) **EUROPÄISCHE PATENTSCHRIFT**

(45) Veröffentlichungstag und Bekanntmachung des Hinweises auf die Patenterteilung:
**12.03.2025 Patentblatt 2025/11**

(21) Anmeldenummer: **21192843.7**

(22) Anmeldetag: **24.08.2021**

(51) Internationale Patentklassifikation (IPC):
**H01R 4/58** (2006.01)          **H01R 13/533** (2006.01)

(52) Gemeinsame Patentklassifikation (CPC):
**H01R 13/533; H01R 4/58;** H01R 2201/26;
Y02T 10/70; Y02T 10/7072; Y02T 90/14

(54) **KONTAKTBAUGRUPPE FÜR EINEN ELEKTRISCHEN STECKVERBINDER UND VERFAHREN ZUR HERSTELLUNG EINES ELEKTRISCHEN STECKVERBINDERS**

CONTACT ASSEMBLY FOR ELECTRIC CONNECTOR AND METHOD FOR MANUFACTURING SAME

MODULE DE CONTACT POUR UN CONNECTEUR ENFICHABLE ÉLECTRIQUE ET PROCÉDÉ DE FABRICATION D'UN CONNECTEUR ENFICHABLE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.03.2023 Patentblatt 2023/09**

(73) Patentinhaber: **Rosenberger Hochfrequenztechnik GmbH & Co. KG 83413 Fridolfing (DE)**

(72) Erfinder:
• **Blakborn, Willem 83334 Inzell (DE)**
• **Auer, Martin 84558 Tyrlaching (DE)**
• **Beicht, Andreas 84489 Burghausen (DE)**

(74) Vertreter: **Lorenz, Matthias Lorenz & Kollegen Patentanwälte Partnerschaftsgesellschaft mbB Alte Ulmer Straße 2 89522 Heidenheim (DE)**

(56) Entgegenhaltungen:
KR-B1- 101 801 394     US-A- 5 403 199
US-B2- 7 364 451

EP 4 142 059 B1

## Beschreibung

Die Erfindung betrifft eine Kontaktbaugruppe für einen elektrischen Steckverbinder, die ein hülsenförmiges Kontaktelement aus einem metallischen, ersten Werkstoff aufweist, gemäß dem Oberbegriff des Anspruchs 1.

Die Erfindung betrifft ferner einen elektrischen Steckverbinder, insbesondere einen Hochvoltsteckverbinder, sowie eine elektrische Steckverbindung aus besagtem Steckverbinder und einem korrespondierenden elektrischen Gegensteckverbinder.

Die Erfindung betrifft außerdem ein Verfahren zur Herstellung eines elektrischen Steckverbinders.

Aus der Elektrotechnik sind verschiedene elektrische Steckverbinder bekannt. Elektrischen Steckverbinder dienen bekanntermaßen dazu, elektrische Versorgungssignale und/oder Datensignale an korrespondierende elektrische Gegensteckverbinder zu übertragen. Bei einem Steckverbinder bzw. Gegensteckverbinder kann es sich beispielsweise um einen Stecker, um einen Einbaustecker, um eine Buchse, um eine Kupplung oder um einen Adapter handeln. Die im Rahmen der Erfindung verwendete Bezeichnung "Steckverbinder" bzw. "Gegensteckverbinder" steht stellvertretend für alle Varianten.

Besondere Anforderungen an elektrische Steckverbinder werden insbesondere im Hochvoltbereich gestellt. Hochvoltsteckverbinder werden in der Fahrzeugtechnik vor allem bei Elektro- und/oder Hybridfahrzeugen eingesetzt, um eine Fahrzeugbatterie mit Ladestrom zu versorgen, um die gespeicherte Energie aus der Batterie zu entnehmen und dem elektrischen Antrieb zuzuführen oder um mehrere Batterien bzw. Batteriemodule untereinander zu verbinden. Die elektrische Steckverbindung muss dabei dauerhaft und sicher ein Eindringen von Feuchtigkeit und Verunreinigungen verhindern und eine einwandfreie Übertragung hoher Ströme gewährleisten. Außerdem sollte die Steckverbindung, insbesondere eine Hochvoltsteckverbindung oder eine Steckverbindung zur Übertragung von sicherheitsrelevanten Steuersignalen, mechanisch robust und gegen ein unbeabsichtigtes Öffnen verlässlich gesichert sein.

Häufig müssen elektrische Steckverbinder, insbesondere Steckverbinder für die Fahrzeugtechnik, kostengünstig im Rahmen einer Massenproduktion herstellbar sein. Aus diesem Grund werden Kontaktelemente von Steckverbindern, insbesondere Außenleiterkontaktelemente, bevorzugt durch ein Druckgussverfahren hergestellt.

Es hat sich allerdings gezeigt, dass die auf diese Weise hergestellten Kontaktelemente bei hohen Temperaturen, wie diese beispielsweise bei der Stromübertragung in der Hochvolttechnik auftreten können, ihre Form verlieren bzw. plastisch verformt werden können.

Dies ist insbesondere ein Problem, wenn die Steckverbindung zwischen dem Steckverbinder und dem Gegensteckverbinder auf einem Kraftschluss beruht, wie dies bei einer Presspassung zwischen den beteiligten Außenleiterkontaktelementen der Fall ist. Insbesondere in diesem Fall kann es bei hohen Temperaturen zu einer Verschlechterung des elektrischen Kontakts und/oder des mechanischen Kontakts in der Steckverbindung kommen.

Zum technologischen Hintergrund sei an dieser Stelle noch auf die US 5,403,199 A verwiesen, die sich auf radial federnde Verbinderklemmen und insbesondere auf eine solche Klemme zur Verwendung in verschiedenen Hochstromanwendungen bezieht.

In Anbetracht des bekannten Stands der Technik besteht die Aufgabe der vorliegenden Erfindung darin, eine Kontaktbaugruppe bereitzustellen, die im Rahmen einer Massenfertigung wirtschaftlich herstellbar ist und die dennoch eine hohe Temperaturstabilität aufweist, und die sich somit vorzugsweise zur Verwendung in einem Hochvoltsteckverbinder eignen kann.

Der vorliegenden Erfindung liegt auch die Aufgabe zugrunde, einen elektrischen Steckverbinder bereitzustellen, der im Rahmen einer Massenfertigung wirtschaftlich herstellbar ist und der dennoch eine hohe Temperaturstabilität aufweist, und der sich somit vorzugsweise zur Verwendung als Hochvoltsteckverbinder eignen kann.

Schließlich ist es auch Aufgabe der Erfindung, eine elektrische Steckverbindung bereitzustellen, die im Rahmen einer Massenfertigung wirtschaftlich herstellbar ist und die dennoch eine hohe Temperaturstabilität aufweist, und die sich somit vorzugsweise zur Verwendung als Hochvoltsteckverbindung eignen kann.

Außerdem ist es Aufgabe der Erfindung, ein wirtschaftliches Verfahren zur Herstellung eines elektrischen Steckverbinders mit hoher Temperaturstabilität bereitzustellen.

Die Aufgabe wird für die Kontaktbaugruppe mit den in Anspruch 1 aufgeführten Merkmalen gelöst. Hinsichtlich des elektrischen Steckverbinders wird die Aufgabe durch die Merkmale des Anspruchs 11 und betreffend die elektrische Steckverbindung durch Anspruch 12 gelöst. Für das Verfahren wird die Aufgabe durch Anspruch 14 gelöst.

Die abhängigen Ansprüche und die nachfolgend beschriebenen Merkmale betreffen vorteilhafte Ausführungsformen und Varianten der Erfindung.

Es ist eine Kontaktbaugruppe für einen elektrischen Steckverbinder vorgesehen, die ein zumindest abschnittsweise hülsenförmiges Kontaktelement aus einem metallischen, ersten Werkstoff aufweist. Das Kontaktelement weist eine erste Mantelfläche zur elektrischen und mechanischen Kontaktierung eines Gegenkontaktelements eines elektrischen Gegensteckverbinders und eine von der ersten Mantelfläche verschiedene, zweite Mantelfläche auf.

Bei dem elektrischen Steckverbinder handelt es sich vorzugsweise um einen Hochvoltsteckverbinder, der sich zur Übertragung hoher elektrischer Ströme eignen kann. Die Kontaktbaugruppe, insbesondere das Kontaktelement der Kontaktbaugruppe, ist daher vorzugsweise ausgebildet, um sich für eine elektrische Energieübertragung in der Hochvolttechnik zu eignen, also zur Übertragung hoher elektrischer Ströme (beispielsweise 100 A bis 700 A) bei Wechselspannungen von 30 V bis 1 kV oder mehr oder Gleichspannungen von 60 V bis 2 kV oder mehr, insbesondere in der Fahrzeugtechnik.

Die Kontaktbaugruppe kann grundsätzlich auch für Steckverbinder zur Energie- und/oder Datenübertragung mit nur geringen elektrischen Strömen vorteilhaft sein.

Unter einem hülsenförmigen Kontaktelement kann insbesondere ein ring- oder rohrförmiges Kontaktelement (vorzugsweise ein längliches Kontaktelement) mit rundem Querschnitt, gegebenenfalls aber auch elliptischem, rechteckigem oder sonstigem Querschnitt verstanden werden.

Das hülsenförmige Kontaktelement muss nicht vollständig geschlossen und kann daher beispielsweise auch nur teilringförmig ausgebildet sein und/oder kann Ausnehmungen, insbesondere axiale Schlitze, aufweisen.

Das hülsenförmige Kontaktelement muss nicht über die gesamte Längserstreckung hülsenförmig bzw. hohl ausgebildet sein. Das hülsenförmige Kontaktelement kann beispielsweise auch nur in einem vorderen, zur Kontaktierung mit dem Gegenkontaktelement vorgesehenen Endabschnitt einen hülsenförmigen Kontaktbereich aufweisen, um beispielsweise mit stiftförmigen Gegenkontaktelementen des Gegensteckverbinders verbindbar zu sein.

Wie nachfolgend noch beschrieben wird, kann das hülsenförmige Kontaktelement der Kontaktbaugruppe vorzugsweise als Außenleiterkontaktelement des Steckverbinders ausgebildet sein. Das hülsenförmige Kontaktelement kann allerdings auch als Innenleiterkontaktelement des Steckverbinders ausgebildet sein.

Vorzugsweise ist die zweite Mantelfläche eine von der ersten Mantelfläche abgewandte Mantelfläche.

Die erste Mantelfläche und/oder die zweite Mantelfläche können jeweils eine vollständig zusammenhängende Fläche sein, können sich gegebenenfalls aber auch jeweils aus mehreren Einzelflächen zusammensetzen, insbesondere wenn das Kontaktelement geschlitzt ist oder Ausnehmungen aufweist, die sich durch die jeweilige Mantelfläche erstrecken.

Grundsätzlich kann es sich bei dem ersten Werkstoff um einen beliebigen metallischen Werkstoff handeln, vorzugsweise ist allerdings ein Zinkwerkstoff oder ein Aluminiumwerkstoff, oder zumindest eine Legierung vorgesehen, die Zink und/oder Aluminium umfasst.

Erfindungsgemäß weist die Kontaktbaugruppe ein Begrenzungselement auf. Das Begrenzungselement ist vorzugsweise aus einem von dem ersten Werkstoff verschiedenen, zweiten Werkstoff ausgebildet. Es ist vorgesehen, dass das Begrenzungselement eine höhere Warmfestigkeit aufweist als das Kontaktelement (insbesondere kann vorgesehen sein, dass der zweite Werkstoff eine höhere Warmfestigkeit aufweist als der erste Werkstoff). Das Begrenzungselement ist zumindest abschnittsweise (vorzugsweise aber vollflächig) an der zweiten Mantelfläche des Kontaktelements befestigt.

Die Warmfestigkeit ist bekanntermaßen ein Kennwert, der die Festigkeit eines Materials bei erhöhten Temperaturen bezeichnet. Ein Material oder ein Gegenstand mit hoher Warmfestigkeit lässt sich bei einer definierten Temperatur daher schlechter verformen bzw. tendiert weniger zu einem Verformen als ein Material oder ein Gegenstand mit geringerer Warmfestigkeit.

In einer besonders bevorzugten Weiterbildung der Erfindung kann insbesondere vorgesehen sein, dass der zweite Werkstoff einen kleineren Wärmeausdehnungskoeffizienten aufweist als der erste Werkstoff.

Der Wärmeausdehnungskoeffizient (auch als "thermischer Ausdehnungskoeffizient" oder einfach nur "Ausdehnungskoeffizient" bekannt) ist ein Kennwert, der das Verhalten eines Stoffes bezüglich Veränderungen seiner Abmessungen bei Temperaturveränderungen durch Wärmeausdehnung beschreibt. Der Wärmeausdehnungskoeffizient kann als thermischer Längenausdehnungskoeffizient (auch als "linearer Wärmeausdehnungskoeffizient" bekannt), thermischer Flächenausdehnungskoeffizient (auch als "flächiger Wärmeausdehnungskoeffizient" bekannt) oder thermischer Raumausdehnungskoeffizient (auch als "räumlicher Wärmeausdehnungskoeffizient" bekannt) angegeben werden.

Vorzugsweise ist der thermische Längenausdehnungskoeffizient des zweiten Werkstoffes kleiner als

$$20/10^6 K$$, besonders bevorzugt kleiner als

$$15/10^6 K$$, ganz besonders bevorzugt kleiner als

$$13/10^6 K$$, noch weiter bevorzugt kleiner als

$$12/10^6 K$$.

Das Begrenzungselement kann auch als Stützelement, Stabilisierungselement oder Verstärkungselement bezeichnet werden. Das Begrenzungselement vermag vorteilhaft eine thermische Verformung des Kontaktelements, insbesondere eine durch einen thermischen Prozess verursachte Bewegung des Kontaktelements, beispielsweise eine thermische Ausdehnung oder thermisches Kriechen, mechanisch zu begrenzen.

Das Begrenzungselement kann daher vorteilhaft der Stabilisierung des Kontaktelements dienen. Die von dem Begrenzungselement bereitgestellte, separate Stützstruktur vermag das Kontaktelement insbesondere für die Verwendung mit hohen Betriebstemperaturen, beispielsweise bedingt durch eine hohe Stromübertragung, zu ertüchtigen, wodurch die Kontaktbaugruppe eine bessere Formstabilität bei hohen Temperaturen aufweisen kann als das Kontaktelement alleine. Das Begrenzungselement kann also eine Formänderung des Kontaktelements - insbesondere eine Formänderung in radialer Richtung in Bezug zu der Mittelachse bzw. Längsachse der Kontaktbaugruppe bzw. des Steckverbinders - und daher ein Entfernen des Kontaktelements von dem korrespondierenden Gegenkontaktelement verhindern.

Ein mit der vorgeschlagenen Kontaktbaugruppe ausgestatteter elektrischer Steckverbinder eignet sich besonders vorteilhaft zur Übertragung hoher Ströme oder sicherheitsrelevanter Signale, da selbst bei widrigen Umgebungsbedingungen, wie hohen Temperaturen oder hohem Druck, verlässlich sichergestellt sein kann, dass sich die elektrische und/oder mechanische Verbindung mit dem Gegensteckverbinder nicht verschlechtert.

Dadurch, dass das Begrenzungselement eine höhere Warmfestigkeit aufweist als das Kontaktelement, weist die Kontaktbaugruppe insgesamt eine gegenüber dem Kontaktelement verbesserte Warmfestigkeit auf.

Gleichzeitig ist die vorgeschlagene Kontaktbaugruppe besonders einfach und kostengünstig herstellbar, da das Kontaktelement nach wie vor beispielsweise mittels Druckgusstechnik hergestellt werden und anschließend mittels eines einfachen Begrenzungselements mit nur geringem Materialbedarf verstärkt werden kann.

In einer Weiterbildung der Erfindung kann vorgesehen sein, dass die erste Mantelfläche eine Innenfläche des Kontaktelements, und die zweite Mantelfläche eine von der Innenfläche abgewandte Außenfläche des Kontaktelements ist.

Das Kontaktelement kann somit von dem korrespondierenden Gegenkontaktelement des Gegensteckverbinders innenseitig kontaktierbar sein, indem das Gegenkontaktelement in das Kontaktelement eingesteckt wird. Eine äußere Mantelfläche des Gegenkotaktelements kann somit den mechanischen und elektrischen Kontakt mit der ersten Mantelfläche des Kontaktelements herstellen, vorzugsweise vollflächig, gegebenenfalls aber auch nur abschnittsweise.

Vorzugsweise ist das hülsenförmige Kontaktelement in diesem Falle ausgebildet, auch noch weitere Komponenten des Steckverbinders in sich zu führen, beispielsweise ein Dielektrikum bzw. einen Isolator und gegebenenfalls weitere Kontaktbaugruppen oder Kontaktelemente, wie eines oder mehrere Innenleiterkontaktelemente.

Das Begrenzungselement kann außenseitig auf das Kontaktelement aufgebracht sein, vorzugsweise vollflächig, gegebenenfalls aber auch nur abschnittsweise, und daher vorteilhaft eine temperaturbedingte Ausdehnung des Kontaktelements blockieren, wodurch ein innenseitiger Kontaktverlust mit dem Gegenkontaktelement verhindert werden kann. Das Begrenzungselement kann in der Art einer Käfighülse ausgebildet sein, um zu verhindern, dass sich das Kontaktelement bei einem Temperaturanstieg radial nach außen von dem Gegenkontaktelement entfernt.

In einer vorteilhaften Weiterbildung der Erfindung kann allerdings insbesondere vorgesehen sein, dass die erste Mantelfläche eine Außenfläche des Kontaktelements, und die zweite Mantelfläche eine von der Außenfläche abgewandte Innenfläche des Kontaktelements ist.

Das Kontaktelement kann somit von dem korrespondierenden Gegenkontaktelement des Gegensteckverbinders außenseitig kontaktierbar sein, indem das Gegenkontaktelement auf das Kontaktelement aufgesteckt bzw. das Kontaktelement in das Gegenkontaktelement eingesteckt wird. Das Gegenkontaktelement kann daher vorzugsweise hülsenförmig ausgebildet sein. Eine innenseitige Mantelfläche des Gegenkotaktelements kann somit den mechanischen und elektrischen Kontakt mit der ersten Mantelfläche des Kontaktelements herstellen, vorzugsweise vollflächig, gegebenenfalls aber auch nur abschnittsweise.

Das Begrenzungselement kann in diesem Fall in das Kontaktelement eingebracht sein, vorzugsweise vollflächig, gegebenenfalls aber auch nur abschnittsweise, und daher vorteilhaft eine temperaturbedingte Ausdehnung des Kontaktelements blockieren, wodurch ein außenseitiger Kontaktverlust mit dem Gegenkontaktelement verhindert werden kann. Das Begrenzungselement kann in der Art einer Stützhülse ausgebildet sein, um zu verhindern, dass sich das Kontaktelement bei einem Temperaturanstieg radial nach innen von dem Gegenkontaktelement entfernt.

Auf vorteilhafte Weise kann schließlich vorgesehen sein, dass das Kontaktelement zwischen dem Begrenzungselement und dem Gegenkontaktelement angeordnet ist, wenn der Steckverbinder mit dem Gegensteckverbinder verbunden ist.

Optional können auch mehrere Begrenzungselemente pro Kontaktbaugruppe vorgesehen sein.

Grundsätzlich kann das Begrenzungselement beliebig ausgebildet sein. Das Begrenzungselement kann das Kontaktelement beispielsweise ausgehend von einer umgebenden Struktur (wie ein Steckverbindergehäuse) im Wesentlichen punktuell oder abschnittsweise steg-, rippen- oder stiftartig stützen. Beispielsweise kann die der zweiten Mantelfläche des Kontaktelements zugewandte Oberfläche des Begrenzungselements strukturiert sein.

Gemäß einer bevorzugten Weiterbildung der Erfindung kann allerdings insbesondere sein, dass das Begrenzungselement hülsenförmig oder zumindest teilringförmig ausgebildet ist.

Insbesondere ein hülsenförmiges Begrenzungselement vermag das Kontaktelement besonders effektiv gegen eine unerwünschte Wärmeausdehnung abzusichern.

Unter einem hülsenförmigen Begrenzungselement kann insbesondere ein ring- oder rohrförmiges Begrenzungselement mit rundem Querschnitt, gegebenenfalls aber auch elliptischem, rechteckigem oder sonstigem Querschnitt verstanden werden. Das hülsenförmige Begrenzungselement muss nicht vollständig geschlossen und kann daher beispielsweise auch nur teilringförmig ausgebildet sein und/oder kann Ausnehmungen, insbesondere axiale Schlitze, aufweisen.

Wie vorstehend bereits erwähnt, können gegebenenfalls auch mehrere Begrenzungselemente vorgesehen sein, beispielsweise zwei Begrenzungselemente, drei Begrenzungselemente, vier Begrenzungselemente oder noch mehr Begrenzungselemente. Insofern mehrere Begrenzungselemente vorgesehen sind, können diese beispielsweise entlang eines gemeinsamen Kontaktelements axial versetzt, insbesondere axial beabstandet, angeordnet sein. Auch eine Anordnung eines zusätzlichen Begrenzungselements, das zumindest abschnittsweise auch an der ersten Mantelfläche des Kontaktelements befestigt ist, kann vorgesehen sein. In der Regel ist allerdings bereits ein Begrenzungselement ausreichend.

Grundsätzlich kann es sich bei dem zweiten Werkstoff des Begrenzungselements um einen beliebigen Werkstoff handeln, beispielsweise um ein Metall, einen Kunststoff, eine Keramik oder eine Kombination verschiedener Materialien.

Gemäß einer Weiterbildung der Erfindung kann insbesondere vorgesehen sein, dass der zweite Werkstoff des Begrenzungselements ein metallischer Werkstoff ist.

Vorzugsweise kann der zweite Werkstoff ein Eisenwerkstoff, Stahlwerkstoff oder Messingwerkstoff sein. Grundsätzlich können aber auch andere Materialien, insbesondere andere der genannten Metalle, zur Ausbildung des zweiten Werkstoffs vorgesehen sein.

In einer Weiterbildung der Erfindung kann vorgesehen sein, dass sich das Begrenzungselement ringförmig umlaufend entlang der zweiten Mantelfläche des Kontaktelements erstreckt.

Vorzugsweise liegt das Begrenzungselement auf der zweiten Mantelfläche zumindest abschnittsweise, insbesondere vollständig bzw. vollflächig, auf.

In einer Weiterbildung der Erfindung kann vorgesehen sein, dass das Begrenzungselement kraftschlüssig an der zweiten Mantelfläche des Kontaktelements befestigt ist.

Das Begrenzungselement kann insbesondere mittels Presspassung an dem Kontaktelement befestigt sein, vorzugsweise unmittelbar, gegebenenfalls aber auch nur mittelbar (z. B. durch Anordnung eines weiteren Elements zwischen Kontaktelement und Begrenzungselement).

In einer vorteilhaften Weiterbildung der Erfindung kann auch vorgesehen sein, dass das Begrenzungselement über eine zwischen dem Begrenzungselement und der zweiten Mantelfläche des Kontaktelements ausgebildete Gewindeverbindung an der zweiten Mantelfläche befestigt ist.

Grundsätzlich können sich beliebige Verbindungstechniken eignen, um das Begrenzungselement und das Kontaktelement unmittelbar oder mittelbar miteinander zu verbinden. Auch eine Schnappverbindung zwischen dem Begrenzungselement und dem Kontaktelement kann beispielsweise vorgesehen sein, um das Begrenzungselement an der zweiten Mantelfläche zu befestigen.

In einer Weiterbildung der Erfindung kann vorgesehen sein, dass das Begrenzungselement an einem für die Verbindung mit dem Gegenkontaktelement vorgesehenen axialen Endabschnitt des Kontaktelements befestigt ist.

Die Unterstützung des Kontaktelements ist insbesondere in dem Bereich, in dem das Kontaktelement mit dem Gegenkontaktelement verbunden werden soll, vorteilhaft bzw. wirkt dort besonders effektiv. Grundsätzlich kann allerdings, beispielsweise konstruktionsbedingt, auch ein axialer Versatz des Begrenzungselements zu der Kontaktposition zwischen Kontaktelement und Gegenkontaktelement vorgesehen sein.

Besonders bevorzugt erstreckt sich das Begrenzungselement ausgehend von dem axialen Endabschnitt, besonders bevorzugt von dem axialen Ende des Kontaktelements, in Richtung auf das von dem Gegenkontaktelement abgewandte Ende des Kontaktelements.

In einer vorteilhaften Weiterbildung der Erfindung kann vorgesehen sein, dass das Kontaktelement einen ersten, axial unmittelbar an die zweite Mantelfläche angrenzenden, axialen Anschlag (insbesondere eine Stufe oder eine Rippe) für das Begrenzungselement aufweist.

Ein Anschlag für das Begrenzungselement kann insbesondere von Vorteil sein, um ein axiales Verrutschen des Begrenzungselements unter widrigen Umgebungsbedingungen zu verhindern und um die Montage des Begrenzungselements auf dem Kontaktelement zu vereinfachen.

Die Erfindung betrifft auch einen elektrischen Steckverbinder, insbesondere einen Hochvoltsteckverbinder, aufweisend zumindest eine Kontaktbaugruppe gemäß den vorstehenden und nachfolgenden Ausführungen.

Die vorgeschlagene elektrische Steckverbindung kann selbst bei widrigen Umgebungsbedingungen, insbesondere bei im Rahmen einer hohen Stromübertragung auftretenden hohen Temperaturen, eine elektrische und mechanische Verbindung sicher aufrechterhalten. Insbesondere können die erforderliche Haltekraft, eine niederohmige elektrische Übertragung und eine hohe und beständige elektromagnetische Verträglichkeit auch bei Temperaturen von beispielsweise über 140 °C garantiert sein.

Der vorgeschlagene Steckverbinder eignet sich daher besonders vorteilhaft als Hochvoltsteckverbinder, insbesondere zur Verwendung im Rahmen der Elektromobilität. Auf vorteilhafte Weise kann durch den elektrischen Steckverbinder beispielsweise ein Zellmodulverbinder-Interface zur Verbindung von Batteriezellmodulen bereitgestellt werden, bei besonders hoher Temperaturbeständigkeit der Kontaktierung.

Der Begriff "Hochvolt" ist vorliegend insbesondere auf Systeme für die Fahrzeugtechnik zu beziehen. Eine Hochvoltübertragung im Sinne dieser Erfindung kann insbesondere auf Wechselspannungen über 30 V bis 1 kV oder mehr oder auf Gleichspannungen über 60 V bis 2,0 kV oder mehr bezogen sein. Vorzugsweise ist das Kontaktelement und/oder das Gegenkontaktelement zur Übertragung hoher elektrischer Ströme (z. B. bis zu 100 A, bis zu 200 A, bis zu 300 A, bis zu 400 A, bis zu 500 A, bis zu 600 A, bis zu 700 A, bis zu 1.500 A, bis zu 2.000 A oder mehr) bei vorzugsweise hohen elektrischen Spannungen (z. B. bis zu 500 V, bis zu 600 V, bis zu 700 V, bis zu 800 V, bis zu 900 V, bis zu 1.000 V, bis zu 1.100 V, bis zu 1.500 V, bis zu 2.000 V oder mehr) ausgelegt.

Grundsätzlich kann sich die Erfindung allerdings zur Übertragung beliebiger Versorgungs- und/oder Kommunikationssignale eignen, beispielsweise auch zur Verwendung in der Hochfrequenztechnik.

In einer vorteilhaften Weiterbildung der Erfindung kann vorgesehen sein, dass zumindest eines der von einem Begrenzungselement ertüchtigten Kontaktelemente als Außenleiterkontaktelement des Steckverbinders ausgebildet ist. Ein Außenleiterkontaktelement ist allerdings nicht unbedingt erforderlich - der Steckverbinder kann beispielsweise auch nur eines oder mehrere Innenleiterkontaktelemente aufweisen.

Es kann daher auch vorgesehen sein, dass zumindest eines der von einem Begrenzungselement ertüchtigten Kontaktelemente als Innenleiterkontaktelement ausgebildet ist, wobei je nach Steckverbinder auch mehrere derartige Innenleiterkontaktelemente vorgesehen sein können, beispielsweise zwei, drei, vier, fünf oder noch mehr Innenleiterkontaktelemente.

Insbesondere kann auch vorgesehen sein, dass alle Kontaktelemente des Steckverbinders erfindungsgemäß mit einem Begrenzungselement ertüchtigt sind.

Die Erfindung betrifft auch eine elektrische Steckverbindung, aufweisend einen elektrischen Steckverbinder gemäß den vorstehenden und nachfolgenden Ausführungen, und den korrespondierenden elektrischen Gegensteckverbinder.

Erfindungsgemäß kann insbesondere eine kraftschlüssige Verbindung zwischen dem Steckverbinder und dem Gegensteckverbinder selbst bei hohen Temperaturen (z. B. bei Temperaturen > 85 °C) beibehalten werden. Die vorgeschlagene elektrische Steckverbindung kann eine hohe Resthaltekraft und einen geringen Übergangswiderstand auch bei hohen Temperaturen bereitstellen und/oder hohen mechanischen Belastungen selbst bei hohen Temperaturen sicher standhalten.

Die erfindungsgemäße Steckverbindung und die Kontaktbaugruppe können besonders vorteilhaft innerhalb eines Fahrzeugs, insbesondere eines Kraftfahrzeugs, zum Einsatz kommen. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Mögliche Einsatzgebiete sind insbesondere Hochvoltsteckverbindungen, vor allem bei Elektro- und/oder Hybridfahrzeugen. Die erfindungsgemäße Steckverbindung und die Kontaktbaugruppe eignen sich allerdings für beliebige Anwendungen innerhalb der gesamten Elektrotechnik und sind nicht auf den Einsatz in der Fahrzeugtechnik und auch nicht auf den Einsatz in der Hochvolttechnik beschränkt zu verstehen.

An dieser Stelle sei erwähnt, dass gegebenenfalls auch der elektrische Gegensteckverbinder eine Kontaktbaugruppe oder mehrere Kontaktbaugruppen gemäß den vorstehenden und nachfolgenden Ausführungen aufweisen kann. Die Erfindung betrifft daher auch einen elektrischen Gegensteckerbinder (insbesondere einen Hochvoltsteckverbinder) zur Verbindung mit einem korrespondierenden elektrischen Steckverbinder, wobei der Gegensteckverbinder zumindest eine Kontaktbaugruppe gemäß den vorstehenden und nachfolgenden Ausführungen aufweist.

Eine entsprechende Verstärkung zumindest eines Kontaktelements des Gegensteckverbinders ergänzend zu der Verstärkung zumindest eines Kontaktelements des Steckverbinders kann die Temperaturbeständigkeit der Steckverbindung gegebenenfalls weiter verbessern. Eine Verstärkung der Kontaktelemente des Steckverbinders einerseits und der Kontaktelemente des Gegensteckverbinders andererseits ist allerdings nicht unbedingt erforderlich. In der Regel kann es bereits ausreichend sein, lediglich den Steckverbinder oder den Gegensteckverbinder mit einer oder mehreren der beschriebenen Kontaktbaugruppen zu versehen.

In einer vorteilhaften Weiterbildung der Erfindung kann vorgesehen sein, dass das Kontaktelement des elektrischen Steckverbinders im verbundenen Zustand der elektrischen Steckverbindung kraftschlüssig mit dem Gegenkontaktelement des elektrischen Gegensteckverbinders verbunden ist.

Vorzugsweise kann die mechanische Verbindung zwischen Steckverbinder und Gegensteckverbinder mittels einer Presspassung zwischen zumindest einem der Kontaktelemente und einem der Gegenkontaktelemente bereitgestellt werden.

Auch wenn eine Presspassung zur Verbindung der Steckverbindung besonders bevorzugt sein kann, können aber auch noch weitere Verbindungstechniken vorgesehen sein (alternativ oder zusätzlich), beispielsweise eine Verschraubung des Steckverbinders mit dem Gegensteckverbinder und/oder eine Rastverbindung. Die vorliegende Erfindung eignet sich grundsätzlich in Kombination mit allen gängigen Verbindungstechniken zwischen einem Steckverbinder und einem Gegensteckverbinder vorteilhaft.

Die Erfindung betrifft auch ein Verfahren zur Herstellung eines elektrischen Steckverbinders, aufweisend zumindest die folgenden Verfahrensschritte:

- Bereitstellen eines hülsenförmigen Kontaktelements aus einem metallischen, ersten Werkstoff, das eine erste Mantelfläche zur elektrischen und mechanischen Kontaktierung eines Gegenkontaktelements eines elektrischen Gegensteckverbinders und eine von der ersten Mantelfläche verschiedene, zweite Mantelfläche aufweist;
- Bereitstellen eines Begrenzungselements, vorzugsweise aus einem von dem ersten Werkstoff verschiedenen, zweiten Werkstoff, wobei das Begrenzungselement eine höhere Warmfestigkeit aufweist als das Kontaktelement; und
- Befestigen des Begrenzungselements zumindest abschnittsweise an der zweiten Mantelfläche des Kontaktelements.

Durch die Verwendung des zusätzlichen Begrenzungselements, dessen Ausgangsmaterial vorzugsweise eine hohe Temperaturbeständigkeit aufweist, insbesondere eine höhere Temperaturbeständigkeit als das Ausgangsmaterial des Kontaktelements, kann eine druck- und temperaturabhängige Verformung des Kontaktelements verhindert oder zumindest ausreichend unterdrückt werden, weshalb die Kontaktierung des Kontaktelements mit dem Gegenkontaktelement langfristig stabil und funktionsbereit bleibt.

Dadurch, dass das Kontaktelement von außen und/oder von innen (je nach Anordnung der Bauteile) gestützt wird, kann eine haltbare Pressverbindung oder sonstige Verbindung zwischen einem Kontaktelement eines Steckverbinders und einem Gegenkontaktelement eines korrespondierenden Gegensteckverbinders hergestellt werden. Selbst wenn der erste Werkstoff somit bei hohen Temperaturen an Stabilität verliert, kann das Kontaktelement durch das Begrenzungselement daran gehindert werden, sich derart plastisch zu verformen, dass die Steckverbindung den mechanischen und/oder elektrischen Kontakt verliert.

In einer Weiterbildung der Erfindung kann vorgesehen sein, dass das Kontaktelement durch ein Druckgussverfahren hergestellt wird, vorzugsweise aus Zink, Aluminium oder aus einer Legierung, die Zink und/oder Aluminium aufweist.

Auf vorteilhafte Weise kann somit die kostengünstige und flexible Formbarkeit des Kontaktelements durch einen Druckgussprozess ausgenutzt und mit der durch das separate Begrenzungselement bereitgestellten hohen Temperaturstabilität kombiniert werden.

Vorzugsweise wird das Begrenzungselement aus einem metallischen Werkstoff hergestellt, insbesondere aus Eisen, Stahl oder Messing.

Merkmale, die im Zusammenhang mit einem der Gegenstände der Erfindung, namentlich gegeben durch die erfindungsgemäße Kontaktbaugruppe, den erfindungsgemäßen elektrischen Steckverbinder, die erfindungsgemäße elektrische Steckverbindung, den erfindungsgemäßen elektrischen Gegensteckverbinder und das erfindungsgemäße Verfahren beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von $\pm 10\%$ oder weniger, vorzugsweise $\pm 5\%$ oder weniger, weiter bevorzugt $\pm 1\%$ oder weniger, und ganz besonders bevorzugt $\pm 0,1\%$ oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Die Erfindung betrifft auch eine von Anspruch 1 unabhängige Kontaktbaugruppe für einen Steckverbinder, aufweisend ein Kontaktelement, wobei das Kontaktelement eine erste Mantelfläche zumindest zur mechanischen Kontaktierung eines Gegenkontaktelements eines Gegensteckverbinders und eine von der ersten Mantelfläche verschiedene, zweite Mantelfläche aufweist, und wobei die Kontaktbaugruppe außerdem ein separates Begrenzungselement aufweist, wobei das Begrenzungselement zumindest abschnittsweise an der zweiten Mantelfläche des Kontaktelements befestigt ist, wobei die Kontaktbaugruppe vorzugsweise eine höhere Warmfestigkeit aufweist, als das Kontaktelement ohne das Begrenzungselement. Die weiteren Merkmale des Anspruchs 1 und der abhängigen Ansprüche sowie die in der vorliegenden Beschreibung beschriebenen Merkmale betreffen vorteilhafte Ausführungsformen und Varianten dieser Kontaktbaugruppe.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:

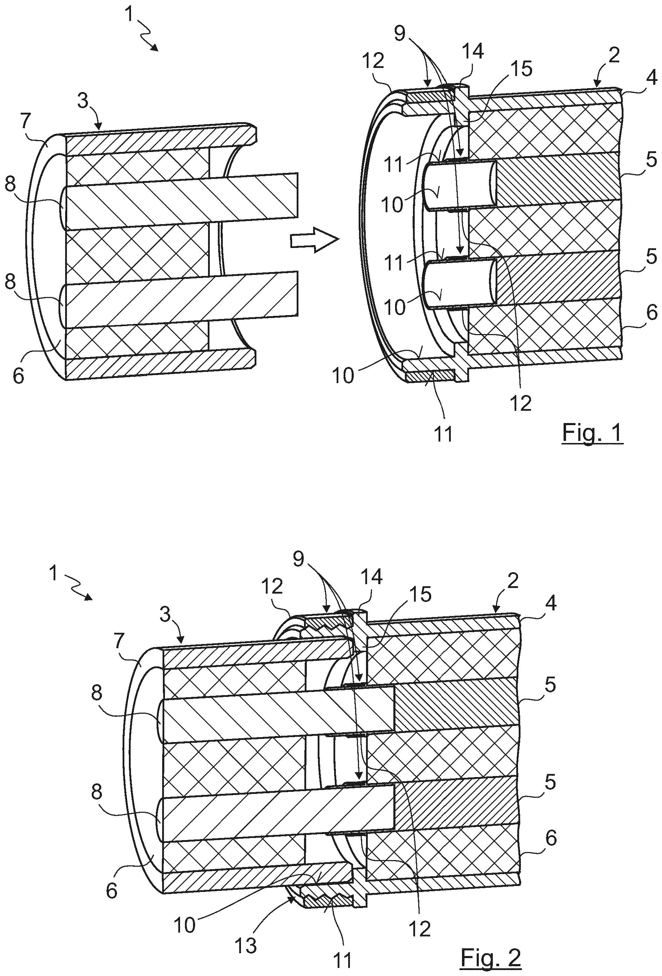

Figur 1  eine elektrische Steckverbindung aus einem elektrischen Steckverbinder und einem korrespondierenden elektrischen Gegensteckverbinder in einer perspektivischen, geschnittenen Darstellung, gemäß einem ersten Ausführungsbeispiel der Erfindung, wobei der Steckverbinder mehrere erfindungsgemäße Kontaktbaugruppe aufweist;

Figur 2  eine elektrische Steckverbindung aus einem elektrischen Steckverbinder und einem korrespondierenden elektrischen Gegensteckverbinder in einer perspektivischen, geschnittenen Darstellung, gemäß einem zweiten Ausführungsbeispiel der Erfindung, wobei der Steckverbinder mehrere erfindungsgemäße Kontaktbaugruppe aufweist;

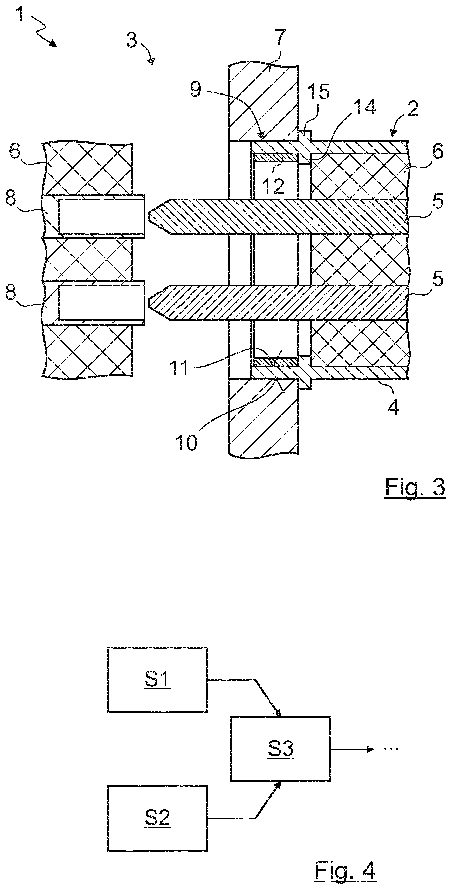

Figur 3  eine elektrische Steckverbindung aus einem elektrischen Steckverbinder und einem korrespondierenden elektrischen Gegensteckverbinder in einer geschnittenen Seitenansicht, gemäß einem dritten Ausführungsbeispiel der Erfindung, wobei der Steckverbinder genau eine erfindungsgemäße Kontaktbaugruppe aufweist; und

Figur 4  ein erfindungsgemäßes Verfahren zur Herstellung eines elektrischen Steckverbinders.

Figur 1 zeigt in perspektivischer Schnittdarstellung eine elektrische Steckverbindung 1, die einen elektrischen Steckverbinder 2 und einen elektrischen Gegensteckverbinder 3 aufweist. Vorzugsweise handelt es sich um eine Hochvoltsteckverbindung zur Übertragung von hohen elektrischen Strömen, insbesondere in der Fahrzeugtechnik. Grundsätzlich kann die elektrische Steckverbindung 1 allerdings auch für die Hochfrequenztechnik oder für beliebige sonstige elektrotechnische Anwendungen geeignet sein.

Der elektrische Steckverbinder 2 und der elektrische Gegensteckverbinder 3 können grundsätzlich beliebig ausgestaltet sein, und insbesondere eine beliebige Anzahl Kontaktelemente 4, 5 und Gegenkontaktelemente 7, 8 aufweisen. In den Ausführungsbeispielen weist der elektrische Steckverbinder 2 rein beispielhaft ein hülsenförmiges Außenleiterkontaktelement 4 auf, in dem zwei Innenleiterkontaktelemente 5 verlaufen, die einen hülsenförmigen Kontaktbereich aufweisen. Zur Befestigung bzw. Führung und zur elektrischen Isolierung der Kontaktelemente 4, 5 voneinander verlaufen die Innenleiterkontaktelemente 5 in den Ausführungsbeispielen durch ein Dielektrikum 6 bzw. durch einen Isolator.

Der Gegensteckverbinder 3 ist zu dem Steckverbinder 2 korrespondierend ausgebildet und weist ein (Gegen)Außenleiterkontaktelement 7 und zwei (Gegen)Innenleiterkontaktelemente 8 auf.

In den Ausführungsbeispielen ist zur Verbindung des Steckverbinders 2 mit dem Gegensteckverbinder 3 ein Kraftschluss vorgesehen, vorzugsweise eine Presspassung zwischen den jeweiligen Kontaktelementen 4, 5 und Gegenkontaktelementen 7, 8. Dies ist allerdings nicht einschränkend zu verstehen, denn grundsätzlich kann sich die Erfindung zur Verwendung mit elektrischen Steckverbindungen 1 eignen, die auf beliebige Weise miteinander verbunden werden, beispielsweise auch miteinander verschraubt werden oder miteinander verrasten.

Bei dem Kontaktelement 4, 5 kann es sich insbesondere um ein mittels eines Druckgussverfahrens hergestelltes Kontaktelement 4, 5 handeln, vorzugsweise aus Zink, Aluminium oder einer Legierung, die Zink und/oder Aluminium aufweist. Ein derartiges Kontaktelement 4, 5 ist in der Regel nicht sonderlich temperaturstabil, weshalb sich die mechanische und elektrische Verbindung mit dem jeweiligen korrespondierenden Gegenkontaktelement 7, 8 bei hohen Temperaturen verschlechtern kann. Beispielsweise können bei hohen Strömen, die in einem Hochvoltsteckverbinder vorkommen, mitunter Temperaturen oberhalb von 140 °C auftreten. Insbesondere ab 85 °C können die im Rahmen eines Druckgussverfahrens hergestellten Werkstoffe leicht ihre Form verlieren.

Es wird vorliegend vorgeschlagen, den elektrischen Steckverbinder 2 mit zumindest einer Kontaktbaugruppe 9 auszustatten, die ein jeweiliges hülsenförmiges Kontaktelement 4, 5 aus einem metallischen, ersten Werkstoff aufweist, das eine erste Mantelfläche 10 zur elektrischen und mechanischen Kontaktierung des korrespondierenden Gegenkontaktelements 7, 8 und eine von der ersten Mantelfläche 10 verschiedene, zweite Mantelfläche 11 aufweist. Die Kontaktbaugruppe 9 weist außerdem ein Begrenzungselement 12 aus einem von dem ersten Werkstoff verschiedenen, zweiten Werkstoff auf, wobei der zweite Werkstoff eine höhere Warmfestigkeit aufweist als der erste Werkstoff. Insbesondere weist der zweite Werkstoff einen kleineren Wärmeausdehnungskoeffizienten auf als der erste Werkstoff. Dieses Begrenzungselement 12 ist zumindest abschnittsweise an der zweiten Mantelfläche 11 des Kontaktelements 4, 5 befestigt. Auf diese Weise kann die Temperaturstabilität des Kontaktelements 4, 5 verbessert werden.

In den in den Figuren 1 und 2 dargestellten Ausführungsbeispielen sind drei Kontaktbaugruppen 9 für den elektrischen Steckverbinder 2 vorgesehen. Eine erste Kontaktbaugruppe 9 weist dabei das Außenleiterkontaktelement 4, eine zweite Kontaktbaugruppe 9 das erste Innenleiterkontaktelement 5 und eine dritte Kontaktbaugruppe 9 das zweite Innenleiterkontaktelement 5 auf. Grundsätzlich kann aber beispielsweise bereits eine Stützung nur des Außenleiterkontaktelements 4 ausreichend sein.

Die Kontaktelemente 4, 5 der Kontaktbaugruppen 9 sind gemäß den Ausführungsbeispielen der Figuren 1 und 2 ausgebildet, um auf das korrespondierende Gegenkontaktelement 7, 8 des Gegensteckverbinders 3 aufgesteckt zu werden (vgl. insbesondere Figur 2). Die erste Mantelfläche 10 des jeweiligen Kontaktelements 4, 5 ist daher eine Innenfläche des Kontaktelements 4, 5 und die zweite Mantelfläche 11 zur Befestigung des Begrenzungselements 12 eine Außenfläche des Kontaktelements 4, 5, die von der Innenfläche abgewandt ist. Das jeweilige Kontaktelement 4, 5 ist somit zwischen dem jeweiligen Begrenzungselement 12 und dem korrespondierenden Gegenkontaktelement 7, 8 angeordnet, wodurch sich die angestrebte Abstützung ergibt.

Die vorgeschlagenen Begrenzungselemente 12 können, wie dargestellt, hülsenförmig, ringförmig oder zumindest teilringförmig ausgebildet sein. Der zweite Werkstoff der Begrenzungselemente 12 ist vorzugsweise ein metallischer Werkstoff, insbesondere ein Eisenwerkstoff, Stahlwerkstoff oder Messingwerkstoff. Die Begrenzungselemente 12 erstrecken sich umlaufend entlang der zweiten Mantelfläche 11 des jeweiligen Kontaktelements 4, 5 und liegen vorzugsweise vollflächig auf der zweiten Mantelfläche 11 auf.

Das Begrenzungselement 12 kann insbesondere unmittelbar kraftschlüssig an der zweiten Mantelfläche 11 des Kontaktelements 4, 5 befestigt sein, beispielsweise mittels einer Presspassung zwischen dem Begrenzungselement 12 und dem Kontaktelement 4, 5, wie in Figur 1 dargestellt.

Eine mögliche Alternative ist im zweiten Ausführungsbeispiel der Figur 2 gezeigt, wonach das Begrenzungselement 12 über eine zwischen dem Begrenzungselement 12 und der zweiten Mantelfläche 11 des Kontaktelements 4, 5 ausgebildete Gewindeverbindung 13 an der zweiten Mantelfläche 11 befestigt ist. Auf die genaue Verbindungstechnik zwischen Begrenzungselement 12 und Kontaktelement 4, 5 kommt es grundsätzlich aber nicht unbedingt an, insofern das Begrenzungselement 12 das Kontaktelement 4, 5 im verbundenen Zustand entsprechend zu stabilisieren vermag.

Für eine besonders gute Abstützung des Kontaktelements 4, 5 ist das Begrenzungselement 12 vorzugsweise an einem für die Verbindung mit dem Gegenkontaktelement 7, 8 vorgesehenen axialen Endabschnitt des Kontaktelements 4, 5 befestigt. Das Begrenzungselement 12 kann sich beispielsweise ausgehend von einem axialen Ende des Kontaktelements 4, 5 erstrecken, wie bezüglich der Außenleiterkontaktelemente 4 in den Figuren 1 bis 3 dargestellt. Es ist allerdings nicht unbedingt erforderlich, dass sich das Begrenzungselement 12 ausgehend von dem axialen Ende des Kontaktelements 4, 5 erstreckt (vgl. Innenleiterkontaktelemente 5 in den Figuren 1 und 2).

Auch die Verwendung von mehreren Begrenzungselementen 12, die beispielsweise jeweils ringförmig um die zweite Mantelfläche 11 umlaufen und die axial voneinander beabstandet, insbesondere axial zueinander versetzt angeordnet sind, kann vorgesehen sein.

Um die Montage zu vereinfachen und um einen besonders robusten Steckverbinder 2 bereitzustellen, kann vorgesehen sein, dass das Kontaktelement 4, 5 einen ersten, axial unmittelbar an die zweite Mantelfläche 11 angrenzenden, axialen Anschlag 14 für das Begrenzungselement 12 aufweist. Optional kann auch ein zweiter Anschlag 15 für das Gegenkontaktelement 7, 8 des Gegensteckverbinders 3 vorgesehen sein.

Die Ausführungsbeispiele der Figuren 1 und 2 zeigen jeweils eine außenseitige Abstützung der Kontaktelemente 4, 5. Es kann grundsätzlich aber auch eine Abstützung des Kontaktelements 4, 5 über die Innenfläche des Kontaktelements 4, 5 vorgesehen sein, wie in dem dritten Ausführungsbeispiel der Figur 3 angedeutet. Somit kann die erste Mantelfläche 10 des Kontaktelements 4, 5, in Figur 3 das Außenleiterkontaktelement 4, eine Außenfläche des Kontaktelements 4, 5 sein, und die zweite Mantelfläche 11 eine von der Außenfläche abgewandte Innenfläche. Diese Konfiguration kann sich beispielsweise vorteilhaft eignen, wenn das Außenleiterkontaktelement 4 des Steckverbinders 2 in ein als Gehäusebaugruppe ausgebildetes Gegenkontaktelement 7 des Gegensteckverbinders 3 eingesteckt werden soll, wie in Figur 3 angedeutet.

Wie sich anhand des Ausführungsbeispiels der Figur 3 ergibt, muss auch nicht unbedingt vorgesehen sein, dass alle beteiligten Kontaktelemente 4, 5 durch ein Begrenzungselement 12 ertüchtigt werden. In dem Ausführungsbeispiel der Figur 3 sind die Innenleiterkontaktelemente 5 beispielsweise als reine Stiftkontakte ausgebildet, die in korrespondierende Gegenkontaktelemente 8 des Gegensteckverbinders 3 einsteckbar sind.

Einen beispielhaften Verfahrensablauf zur Herstellung eines entsprechenden elektrischen Steckverbinders 2 zeigt Figur 4.

Gemäß einem ersten Verfahrensschritt S1 kann zunächst das hülsenförmige Kontaktelement 4, 5 bereitgestellt werden. Das Kontaktelement 4, 5 kann vorzugsweise durch eine Druckgusstechnik hergestellt werden, insbesondere aus Zink, Aluminium oder einer Legierung, die Zink und/oder Aluminium aufweist.

In einem zweiten Verfahrensschritt S2, der parallel, gegebenenfalls aber auch vor oder nach dem ersten Verfahrensschritt S1 ausgeführt werden kann, kann das Begrenzungselement 12 bereitgestellt werden.

In einem den ersten beiden Verfahrensschritten S1, S2 nachfolgenden, dritten Verfahrensschritt S3 kann das Begrenzungselement 12 zumindest abschnittsweise an der zweiten Mantelfläche 11 des Kontaktelements 4, 5 befestigt werden.

Grundsätzlich können im Rahmen des vorgeschlagenen Verfahrens auch noch weitere Verfahrensschritte zur Herstellung des elektrischen Steckverbinders 2 vorgesehen sein. Beispielsweise kann der elektrische Steckverbinder 2 mit einem elektrischen Kabel und/oder mit einer Stromschiene verbunden werden. Das vorgeschlagene Verfahren lässt sich grundsätzlich mit beliebigen bekannten Verfahrensschritten zur Herstellung beliebiger elektrischer Steckverbinder kombinieren.

**Patentansprüche**

1. Kontaktbaugruppe (9) für einen elektrischen Steckverbinder (2), aufweisend ein hülsenförmiges Kontaktelement (4, 5) aus einem metallischen, ersten Werkstoff, wobei das Kontaktelement (4, 5) eine erste Mantelfläche (10) zur elektrischen und mechanischen Kontaktierung eines Gegenkontaktelements (7, 8) eines elektrischen Gegensteckverbinders (3) und eine von der ersten Mantelfläche (10) verschiedene, zweite Mantelfläche (11) aufweist, die Kontaktbaugruppe aufweisend ein Begrenzungselement (12), vorzugsweise aus einem von dem ersten Werkstoff verschiedenen, zweiten Werkstoff, wobei das Begrenzungselement (12) zumindest abschnittsweise an der zweiten Mantelfläche (11) des Kontaktelements (4, 5) befestigt ist, **dadurch gekennzeichnet, dass** das Begrenzungselement (12) eine höhere Warmfestigkeit aufweist als das Kontaktelement (4, 5).

2. Kontaktbaugruppe (9) nach Anspruch 1, **dadurch gekennzeichnet, dass** der zweite Werkstoff einen kleineren Wärmeausdehnungskoeffizienten aufweist als der erste Werkstoff.

3. Kontaktbaugruppe (9) nach Anspruch 1 oder 2, **dadurch gekennzeichnet, dass** die erste Mantelfläche (10)

   a) eine Innenfläche des Kontaktelements (4, 5), und die zweite Mantelfläche (11) eine von der Innenfläche abgewandte Außenfläche des Kontaktelements (4, 5) ist; oder

   b) eine Außenfläche des Kontaktelements (4, 5), und die zweite Mantelfläche (11) eine von der Außenfläche abgewandte Innenfläche des Kontaktelements (4, 5) ist.

4. Kontaktbaugruppe (9) nach einem der Ansprüche 1 bis 3, **dadurch gekennzeichnet, dass** das Begrenzungselement (12) hülsenförmig oder zumindest teilringförmig ausgebildet ist.

5. Kontaktbaugruppe (9) nach einem der Ansprüche 1 bis 4, **dadurch gekennzeichnet, dass** der zweite Werkstoff des Begrenzungselements (12) ein metallischer Werkstoff ist, vorzugsweise ein Eisenwerkstoff, Stahlwerkstoff oder Messingwerkstoff.

6. Kontaktbaugruppe (9) nach einem der Ansprüche 1 bis 5, **dadurch gekennzeichnet, dass** sich das Begrenzungselement (12) ringförmig umlaufend entlang der zweiten Mantelfläche (11) des Kontaktelements (4, 5) erstreckt, wobei das Begrenzungselement (12) auf der zweiten Mantelfläche (11) zumindest abschnittsweise aufliegt.

7. Kontaktbaugruppe (9) nach einem der Ansprüche 1 bis 6, **dadurch gekennzeichnet, dass** das Begrenzungselement (12) kraftschlüssig an der zweiten Mantelfläche (11) des Kontaktelements (4, 5) befestigt ist, vorzugsweise mittels einer Presspassung zwischen dem Begrenzungselement (12) und dem Kontaktelement (4, 5).

8. Kontaktbaugruppe (9) nach einem der Ansprüche 1 bis 7, **dadurch gekennzeichnet, dass** das Begrenzungselement (12) über eine zwischen dem Begrenzungselement (12) und der zweiten Mantelfläche (11) des Kontaktelements (4, 5) ausgebildete Gewindeverbindung (13) an der zweiten Mantelfläche (11) befestigt ist.

9. Kontaktbaugruppe (9) nach einem der Ansprüche 1 bis 8, **dadurch gekennzeichnet, dass** das Begrenzungselement (12) an einem für die Verbindung mit dem Gegenkontaktelement (7, 8) vorgesehenen axialen Endabschnitt des Kontaktelements (4, 5) befestigt ist.

10. Kontaktbaugruppe (9) nach einem der Ansprüche 1 bis 9, **dadurch gekennzeichnet, dass** das Kontaktelement (4, 5) einen ersten, axial unmittelbar an die zweite Mantelfläche (11) angrenzenden, axialen Anschlag (14) für das Begrenzungselement (12) aufweist.

11. Elektrischer Steckverbinder (2), insbesondere Hochvoltsteckverbinder, aufweisend zumindest eine Kontaktbaugruppe (9) gemäß einem der Ansprüche 1 bis 10, wobei das Kontaktelement zumindest einer ersten der genannten Kontaktbaugruppen (9) als Außenleiterkontaktelement (4) ausgebildet ist und/oder wobei das Kontaktelement zumindest einer zweiten der Kontaktbaugruppen (9) als innerhalb des Außenleiterkontaktelements (4) angeordnetes Innenleiterkontaktelement (5) ausgebildet ist.

12. Elektrische Steckverbindung (1), aufweisend einen elektrischen Steckverbinder (2) gemäß Anspruch 11, und den elektrischen Gegensteckverbinder (3).

13. Elektrische Steckverbindung (1) nach Anspruch 12, **dadurch gekennzeichnet, dass** das Kontaktelement (4, 5) des elektrischen Steckverbinders (2) im verbundenen Zustand der elektrischen Steckverbindung (1) kraftschlüssig mit dem Gegenkontaktelement (7, 8) des elektrischen Gegensteckverbinders (3) verbunden ist, vorzugsweise mittels einer Presspassung zwischen dem Kontaktelement (4, 5) und dem Gegenkontaktelement (7, 8).

14. Verfahren zur Herstellung eines elektrischen Steckverbinders (2), aufweisend zumindest die folgenden Verfahrensschritte:

- Bereitstellen eines hülsenförmigen Kontaktelements (4, 5) aus einem metallischen, ersten Werkstoff, das eine erste Mantelfläche (10) zur elektrischen und mechanischen Kontaktierung eines Gegenkontaktelements (7, 8) eines elektrischen Gegensteckverbinders (3) und eine von der ersten Mantelfläche (10) verschiedene, zweite Mantelfläche (11) aufweist;
- Bereitstellen eines Begrenzungselements (12), vorzugsweise aus einem von dem ersten Werkstoff verschiedenen, zweiten Werkstoff, wobei das Begrenzungselement (12) eine höhere Warmfestigkeit aufweist als das Kontaktelement (4, 5); und
- Befestigen des Begrenzungselements (12) zumindest abschnittsweise an der zweiten Mantelfläche (11) des Kontaktelements (4, 5).

15. Verfahren nach Anspruch 14, **dadurch gekennzeichnet, dass** das Kontaktelement (4, 5) durch ein Druckgussverfahren hergestellt wird, vorzugsweise aus Zink, Aluminium oder einer Legierung, die Zink und/oder Aluminium aufweist.

**Claims**

1. Contact assembly (9) for an electrical plug-in connector (2), having a sleeve-shaped contact element (4, 5) made of a metallic first material, wherein the contact element (4, 5) has a first lateral surface (10) for making electrical and mechanical contact with a mating contact element (7, 8) of a mating electrical plug-in connector (3) and a second lateral surface (11) different from the first lateral surface (10), the contact assembly comprising a delimiting element (12), preferably made from a second material different from the first material, wherein the delimiting element (12) is fastened to the second lateral surface (11) of the contact element (4, 5) at least in certain portions,
**characterized in that**
the delimiting element (12) has a higher high-temperature strength than the contact element (4, 5).

2. Contact assembly (9) according to Claim 1,
**characterized in that**
the second material has a lower coefficient of thermal expansion than the first material.

3. Contact assembly (9) according to Claim 1 or 2,
**characterized in that**
the first lateral surface (10)

a) is an inner surface of the contact element (4, 5), and the second lateral surface (11) is an outer surface, facing away from the inner surface, of the contact element (4, 5); or
b) is an outer surface of the contact element (4, 5), and the second lateral surface (11) is an inner surface, facing away from the outer surface, of the contact element (4, 5).

4. Contact assembly (9) according to one of Claims 1 to 3,
**characterized in that**
the delimiting element (12) has a sleeve-shaped form or is at least partially in the form of part of a ring.

5. Contact assembly (9) according to one of Claims 1 to 4,
**characterized in that**
the second material of the delimiting element (12) is a metallic material, preferably an iron material, steel material or brass material.

6. Contact assembly (9) according to one of Claims 1 to 5,
**characterized in that**
the delimiting element (12) extends annularly circumferentially along the second lateral surface (11) of the contact element (4, 5), wherein the delimiting element (12) rests on the second lateral surface (11) at least in certain portions.

7. Contact assembly (9) according to one of Claims 1 to 6,
**characterized in that**
the delimiting element (12) is fastened to the second lateral surface (11) of the contact element (4, 5) by a force fit, preferably by means of an interference fit between the delimiting element (12) and the contact element (4, 5).

8. Contact assembly (9) according to one of Claims 1 to 7,
**characterized in that**
the delimiting element (12) is fastened to the second lateral surface (11) via a threaded connection (13) formed between the delimiting element (12) and the second lateral surface (11) of the contact element (4, 5).

9. Contact assembly (9) according to one of Claims 1 to 8,
**characterized in that**
the delimiting element (12) is fastened to an axial end portion of the contact element (4, 5) that is intended for connection to the mating contact element (7, 8).

10. Contact assembly (9) according to one of Claims 1 to 9,
**characterized in that**
the contact element (4, 5) has a first axial stop (14), axially directly adjoining the second lateral surface (11), for the delimiting element (12).

11. Electrical plug-in connector (2), in particular high-voltage plug-in connector, having at least one contact assembly (9) according to one of Claims 1 to 10, wherein the contact element of at least a first one of the contact assemblies (9) mentioned is in the form of an external conductor contact element (4) and/or wherein the contact element of at least a second one of the contact assemblies (9) is in the form of an internal conductor contact element (5) arranged within the external conductor contact element (4).

12. Electrical plug-in connection (1), having an electrical plug-in connector (2) according to Claim 11 and the mating electrical plug-in connector (3).

13. Electrical plug-in connection (1) according to Claim 12,
**characterized in that**
the contact element (4, 5) of the electrical plug-in connector (2) is connected by a force fit to the mating contact element (7, 8) of the mating electrical plug-in connector (3) in the connected state of the electrical plug-in connection (2), preferably by means of an interference fit between the contact element (4, 5) and the mating contact element (7, 8).

14. Method for producing an electrical plug-in connector (2), having at least the following method steps:

- providing a sleeve-shaped contact element (4, 5) made of a metallic first material, which has a first lateral surface (10) for making electrical and mechanical contact with a mating contact element (7, 8) of a mating electrical plug-in connector (3) and a second lateral surface (11) different from the first lateral surface (10);
- providing a delimiting element (12), preferably made of a second material different from the first material, wherein the delimiting element (12) has a higher high-temperature strength than the contact element (4, 5); and
- fastening the delimiting element (12) to the second lateral surface (11) of the contact element (4, 5) at least in certain portions.

15. Method according to Claim 14,
**characterized in that**
the contact element (4, 5) is produced by a die casting method, preferably from zinc, aluminum or an alloy comprising zinc and/or aluminum.

**Revendications**

1. Module de contact (9) pour un connecteur enfichable électrique (2), présentant un élément de contact en forme de douille (4, 5) composé d'un premier matériau métallique, dans lequel l'élément de contact (4, 5) présente une première surface latérale (10) pour venir en contact électrique et mécanique avec un élément de contact homologue (7, 8) d'un connecteur enfichable homologue électrique (3) et une seconde surface latérale (11) différente de la première surface latérale (10), le module de contact présentant un élément de délimitation (12), de préférence composé d'un second matériau, différent du premier matériau, dans lequel l'élément de délimitation (12) est fixé au moins par sections à la seconde surface latérale (11) de l'élément de contact (4, 5), **caractérisé en ce que** l'élément de délimitation (12) présente une résistance à la chaleur supérieure à l'élément de contact (4, 5).

2. Module de contact (9) selon la revendication 1, **caractérisé en ce que** le second matériau présente un coefficient de dilatation thermique inférieur au premier matériau.

3. Module de contact (9) selon la revendication 1 ou 2, **caractérisé en ce que** la première surface latérale (10)

a) est une surface intérieure de l'élément de contact (4, 5), et la seconde surface latérale (11) est une surface extérieure de l'élément de contact (4, 5) opposée à la surface intérieure ; ou
b) est une surface extérieure de l'élément de contact (4, 5), et la seconde surface latérale (11) est une surface intérieure de l'élément de contact (4, 5) opposée à la surface extérieure.

4. Module de contact (9) selon une des revendications 1 à 3, **caractérisé en ce que** l'élément de délimitation (12) est conçu en forme de douille ou au moins en forme d'anneau partiel.

5. Module de contact (9) selon une des revendications 1 à 4, **caractérisé en ce que** le second matériau de l'élément de délimitation (12) est un matériau métallique, de préférence un matériau en fer, un matériau en acier ou un matériau en laiton.

6. Module de contact (9) selon une des revendications 1 à 5, **caractérisé en ce que** l'élément de délimitation (12) s'étend de manière annulaire circonférentielle le long de la seconde surface latérale (11) de l'élément de contact (4, 5), dans lequel l'élément de délimitation (12) repose au moins par sections sur la seconde surface latérale (11).

7. Module de contact (9) selon une des revendications 1 à 6, **caractérisé en ce que** l'élément de délimitation (12) est fixé par complémentarité de force à la seconde surface latérale (11) de l'élément de contact (4, 5), de préférence à l'aide d'un ajustement serré entre l'élément de délimitation (12) et l'élément de contact (4, 5).

8. Module de contact (9) selon une des revendications 1 à 7, **caractérisé en ce que** l'élément de délimitation (12) est fixé à la seconde surface latérale (11) par le biais d'un liaison filetée (13) conçue entre l'élément de délimitation (12) et la seconde surface latérale (11) de l'élément de contact (4, 5).

9. Module de contact (9) selon une des revendications 1 à 8, **caractérisé en ce que** l'élément de délimitation (12) est fixé à une section d'extrémité axiale de l'élément de contact (4, 5) prévue pour la liaison avec l'élément de contact homologue (7, 8).

10. Module de contact (9) selon une des revendications 1 à 9, **caractérisé en ce que** l'élément de contact (4, 5) présente une première butée axiale (14) axialement directement adjacente à la seconde surface latérale (11) pour l'élément de délimitation (12).

11. Connecteur enfichable électrique (2), en particulier connecteur enfichable haute tension, présentant au moins un module de contact (9) selon une des revendications 1 à 10, dans lequel l'élément de contact d'au moins un premier desdits modules de contact (9) est conçu sous la forme d'un élément de contact conducteur extérieur (4) et/ou dans lequel l'élément de contact d'au moins un second des modules de contact (9) est conçu sous la forme d'un élément de contact conducteur intérieur (5) disposé à l'intérieur de l'élément de contact conducteur extérieur (4).

12. Connexion enfichable électrique (1), présentant un connecteur enfichable électrique (2) selon la revendication 11 et le connecteur enfichable homologue électrique (3).

13. Connexion enfichable électrique (1) selon la revendication 12, **caractérisée en ce que** l'élément de contact (4, 5) du connecteur enfichable électrique (2), dans l'état relié de la connexion enfichable électrique (1), est relié par complémentarité de force à l'élément de contact homologue (7, 8) du connecteur enfichable homologue électrique (3), de préférence à l'aide d'un ajustement serré entre l'élément de contact (4, 5) et l'élément de contact homologue (7, 8).

14. Procédé destiné à fabriquer un connecteur enfichable électrique (2), présentant au moins les étapes de procédé suivantes :

    - fournir un élément de contact en forme de douille (4, 5) composé d'un premier matériau métallique qui présente une première surface latérale (10) pour venir en contact électrique et mécanique avec un élément de contact homologue (7, 8) d'un connecteur enfichable homologue électrique (3) et une seconde surface latérale (11) différente de la première surface latérale (10) ;
    - fournir un élément de délimitation (12), de préférence composé d'un second matériau, différent du premier matériau, dans lequel l'élément de délimitation (12) présente une résistance à la chaleur supérieure à l'élément de contact (4, 5) ; et
    - fixer l'élément de délimitation (12) au moins par sections à la seconde surface latérale (11) de l'élément de contact (4, 5).

15. Procédé selon la revendication 14, **caractérisé en ce que** l'élément de contact (4, 5) est fabriqué par une méthode de moulage sous pression, de préférence à partir de zinc, d'aluminium ou d'un alliage qui présente du zinc et/ou de l'aluminium.

Fig. 1

Fig. 2

Fig. 3

Fig. 4

**EP 4 142 059 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5403199 A